# EUROPÄISCHE PATENTSCHRIFT

(11) **EP 1 082 712 B1**
(45) Veröffentlichungstag und Bekanntmachung des Hinweises auf die Patenterteilung: **07.08.2002**
(21) Anmeldenummer: 99934462.5
(22) Anmeldetag: 07.05.1999
(51) Int. Cl.: G08C 17/02, E05B 49/00, B60R 25/04

(54) **NACHRICHTENÜBERTRAGUNG IN EINEM FUNKBASIERTEN SYSTEM ZUR SICHERUNG ODER ZUGANGSKONTROLLE UND VERFAHREN DAFÜR**
SYSTEM AND METHOD FOR TRANSMITTING MESSAGES IN A RADIO BASED SYSTEM FOR SECURING OR ACCESS CONTROL
SYSTEME ET PROCEDE DE TRANSMISSION DE MESSAGES DANS UN SYSTEME BASE SUR RADIO POUR LA PROTECTION OU LE CONTROLE D'ACCES

(30) Priorität: 11.05.1998 AU PP346498; 14.10.1998 AU PP647098; 28.04.1999 AU 2400599
(43) Veröffentlichungstag der Anmeldung: 14.03.2001
(73) Patentinhaber: ROBERT BOSCH GMBH, 70442 Stuttgart (DE)
(72) Erfinder: SCHMITZ, Stephan, D-50672 Köln (DE); PAVATICH, Gianfranco, Keilor Downs, VIC 3038 (AU)
(86) Internationale Anmeldenummer: DE9901408
(87) Internationale Veröffentlichungsnummer: WO9959284

(56) Entgegenhaltungen:
- EP-A- 0 568 938
- DE-A- 4 329 697
- DE-A- 19 705 502
- GB-A- 2 288 261

## Beschreibung

Die Erfindung betrifft ein Verfahren und ein System zur Nachrichtenübertragung, das so ausgestaltet ist, daß Funkstörungen und Manipulation durch die Benutzung eines Relaissenders auf ein Minimum reduziert werden. Die Erfindung ist insbesondere aber nicht ausschließlich für die Anwendung in einem funkbasierten Fahrzeugsicherungssystem gedacht.

### Hintergrund der Erfindung

Ein Relaissender enthält im wesentlichen eine Sende- und Empfangsantenne und einen Verstärker, der den Verstärkungsfaktor eines empfangenen Signals erhöht, so daß die effektive Reichweite einer Funkverbindung zwischen zwei Übertragungsgeräten vergrößert wird. Der Relaissender erhöht auch den Störfaktor, da die Störfaktoren jeder der Antennen und des Verstärkers hinzukommen. Eine Manipulation durch einen Relaissender liegt dann vor, wenn ein Relaissender dazu benutzt wird, eine Signalübertragung zwischen zwei Geräten, wie zum Beispiel Sendeempfängern eines funkbasierten Fahrzeugsicherungssystems, zu verstärken.

Außer einer Relaissender-Manipulation können allgemeine Signal- und Rauschpegel auf den verfügbaren Übertragungsfrequenzen die Kommunikation beeinträchtigen.

Aus der EP-A 568 938 ist ein Verfahren zur Herstellung einer störungsfreien Funkverbindung bekannt. Sender und Empfänger können auf unterschiedlichen Kanälen miteinander kommunizieren. Zur Beschleunigung der Kanalsuchvorgänge durch den Empfänger ist die Auswertung eines sogenannten Squelch-Signals vorgesehen, das als allgemeine Belegungsinformation des gerade vom Empfänger eingestellten HF-Kanals dient. Bei der Funktion "Empfänger sucht freien Kanal" signalisiert das Nicht-Vorliegen des Squelch-Signals einen freien Kanal. Eine Weiterschaltung der Empfangsfrequenz des Empfängers zur Suche eines freien Kanals wird solange durchgeführt, bis die Auswertung des Squelch-Signals ergibt, dass kein HF-Signal am Empfänger anliegt.

### Aufgabe der Erfindung

Die vorliegende Erfindung beabsichtigt, das Vorkommen von Manipulationen durch Relaissender zu verhindern und ein zuverlässiges Nachrichtenübertragungsverfahren, das gegenüber Störeffekten von externen Quellen sicher ist, zur Verfügung zu stellen, wobei es zum Beispiel für ein Sicherungs- und Zugangskontrollsystem, das eine Funkstrecke zwischen den Sendeempfängern verwendet, geeignet ist.

Diese Aufgabe wird durch die Merkmale der unabhängigen Ansprüche gelöst.

### Kurzbeschreibung der Zeichnungen

Es folgt eine Erläuterung der Erfindung anhand der Zeichnungen, welche nur Beispiele, die die Vielfalt der Anwendungsmöglichkeiten nicht einschränken sollen, darstellen:
Figur 1: Ein Diagramm eines Nachrichtenübertragungssystems
Figur 2: Ein Flußdiagramm, das das Scannen der Kanäle veranschaulicht.
Figur 3 und 4: Flußdiagramme, die eine erste Betriebsart des Systems veranschaulichen.
Figur 5: Veranschaulicht eine zweite Betriebsart des Systems.
Figur 6 und 7: Flußdiagramme, die die Auswahl der Sendestärke veranschaulichen.
Figur 8: Ein Diagramm eines Fahrzeugsicherungssystems.

### Detaillierte Beschreibung einer bevorzugten Ausführung

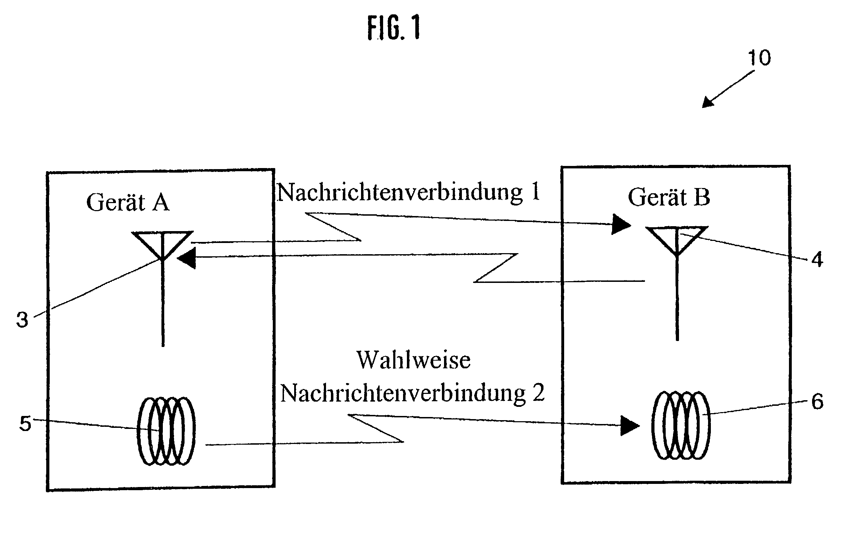

Ein Nachrichtenübertragungssystem ist schematisch in Figur 1 gezeigt, wie es eine erste Sendeeinheit A und eine zweite Sendeeinheit B enthält, wobei eine Nachrichtenverbindung 1 zwischen den beiden mit Hilfe der entsprechenden Antennen 3 und 4 aufgebaut wird. Wahlweise kann eine zweite Nachrichtenverbindung mit den beiden Antennen 5 und 6 aufgebaut werden. Im Anwendungsfall dient eines der beiden Geräte als Initiator, der die Kommunikation zwischen den Einheiten einleitet und das andere Gerät dient als antwortende Einheit.

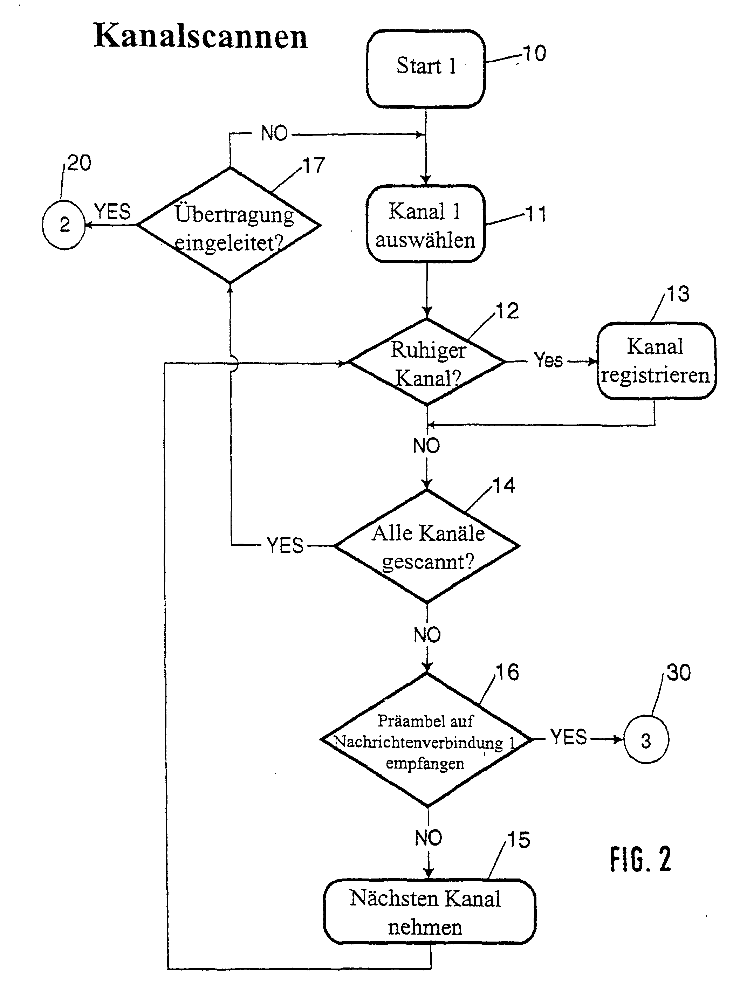

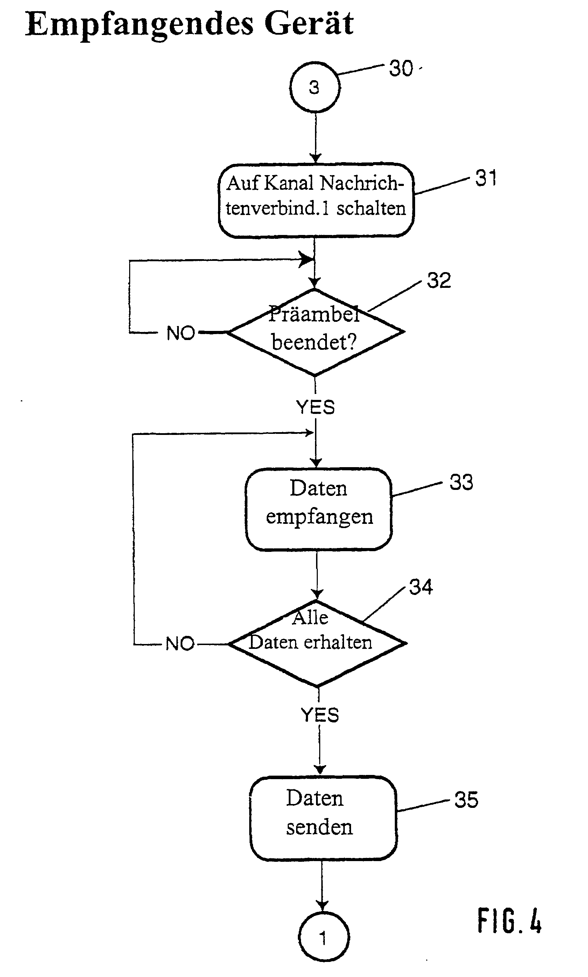

Zumindest eines der Geräte A und B enthält eine Kanalscan-Einrichtung, um die Signalstärken und/oder die Rauschstärken auf mehreren Funkkanälen entsprechend Prozedur 1 in Figur 2 zu scannen. Prozedur 1 ist durch die Referenznummer 10 gekennzeichnet und enthält die Auswahl eines ersten Funkkanals bei 11. Eine Auswertung, ob der Pegel des Signals oder des Rauschens unter einer festgelegten Schwelle liegt, wird bei Schritt 12 gemacht. Wenn der Kanal ausreichend ruhig ist, wird er bei Schritt 13 registriert und in jedem Fall wird eine Entscheidung bei 14 darüber gemacht, ob jeder der Kanäle schon gescannt wurde. Wenn noch weitere Kanäle gescannt werden müssen, dann wird der nächste Kanal bei 15 ausgewählt, worauf Schritt 12 wiederholt wird. Bevor der nächste Kanal zum Scannen ausgewählt wird, wird eine Überprüfung bei 16 durchgeführt, ob die Kommunikation durch die andere Einheit der Nachrichtenverbindung 1 eingeleitet wurde, in welchem Fall eine Prozedur 3, durch die Referenznummer 30 gekennzeichnet, eingeleitet wird, wie mit Bezug auf Figur 4 beschrieben. Wenn bei Schritt 24 bestimmt wird, daß alle Kanäle gescannt worden sind, dann wird Prozedur 10 erneut begonnen, es sei denn, das Gerät selbst wird bei Schritt 17 zum Senden aktiviert, in welchem Fall eine Prozedur 2, gekennzeichnet durch die Referenznummer 20, angenommen wird.

Die Kanalscan-Prozedur stellt dabei eine Methode zur Auswahl einer Frequenz mit niedrigem Signal- und/oder Rauschpegel zur Funkübertragung zwischen den Geräten dar, wodurch die günstigste Frequenz für die Kommunikation erzielt wird. Gerät A oder Gerät B scannen am besten kontinuierlich alle verfügbaren Kanäle (bis zu 16 möglichen Kanäle sind angedacht) der Nachrichtenverbindung 1. Dadurch kann eine Rausch- oder Signalzuordnungstabelle mit jedem Kanal erstellt und ständig aktualisiert werden.

Sobald ein geeigneter Kanal mit niedrigem Signal- oder Geräuschpegel ausgewählt wurde, wird die Übertragung in einem der folgenden Modi weitergeführt:

### Modus 1

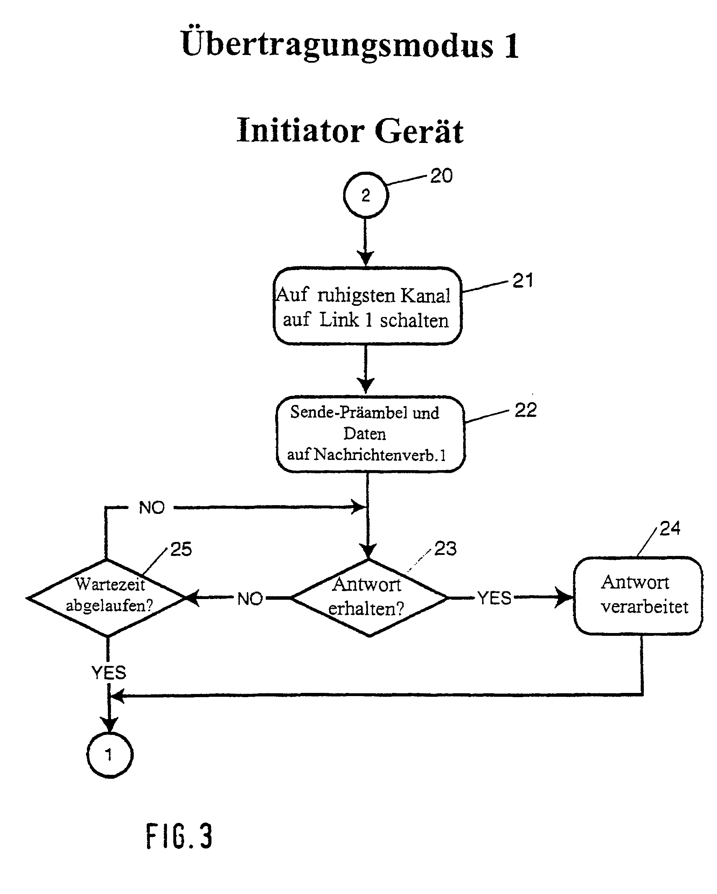

Der erste Übertragungsmodus verwendet Prozedur 2 und 3 wie mit Bezugnahme auf Figur 3 und 4 beschrieben. Prozedur 2, durch Referenznummer 20 gekennzeichnet, wird von dem Initiator-Gerät wie in Figur 3 gezeigt, ausgeführt. Nach Aktivierung des Initiator-Geräts wird bei Schritt 21 auf den leisesten Kanal geschaltet und ein Startsignal / Präambel, sowie Daten werden bei Schritt 22 auf Nachrichtenverbindung 1 gesendet. Im Anschluß der Sendung wartet das Initiator-Gerät auf eine Reaktion von dem antwortenden Gerät bei 23. Wenn eine Antwort empfangen wird, wird sie bei 24 verarbeitet, und danach kehrt das Initiator-Gerät zu Prozedur 1 zurück. Anderenfalls, wenn keine Antwort empfangen wurde, wird bei 25 eine Wartezeit festgelegt. Wenn nach Ablauf der Wartezeit keine Antwort erhalten wurde, kehrt das Initiator-Gerät wieder zu Prozedur 1 zurück. In der Zwischenzeit, wenn das antwortende Gerät das Startsignal / Präambel erhalten hat, fängt Prozedur 3 an, wobei das antwortende Gerät auf den Kanal, der durch das Initiator-Gerät ausgewählt wurde, bei Schritt 31 schaltet und auf den Abschluss der Präambel wartet. Bei 32 wird festgestellt, ob die Präambel beendet ist. Nach dem Ende fährt das antwortende Gerät fort, um bei 33 Daten zu empfangen. Bei 34 wird eine Feststellung darüber gemacht, ob alle Daten empfangen wurden, und nach Abschluß der Datenübertragung sendet das antwortende Gerät eine Antwort bei 35 und kehrt zu Prozedur 1 zurück.

Bei normalem Betrieb sind beide Geräte im Kanalscanning-Modus und entweder das eine oder das andere kann die Rolle des Initiator-Geräts annehmen, abhängig davon, welches Gerät als erstes aktiviert wird. Nach der Aktivierung sollte das Initiator-Gerät bevorzugterweise die Präambel mindestens so lange senden, wie die komplette Kanalscanperiode dauert.

### Modus 2

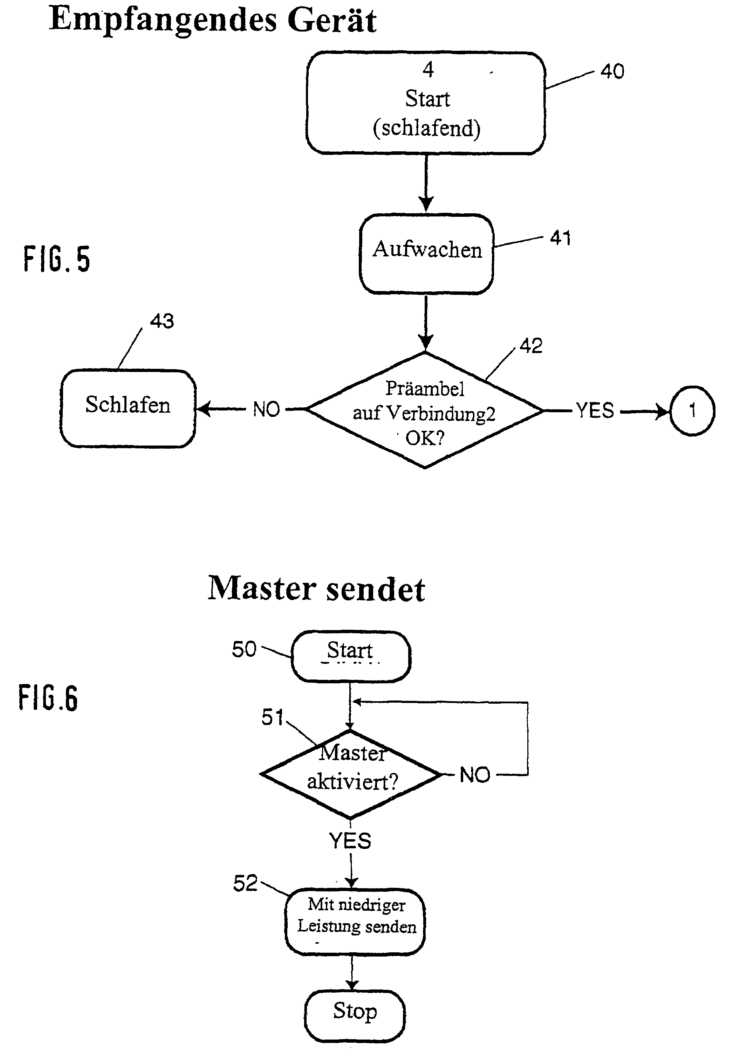

Eine zweite Betriebsart ist hier mit Bezug auf Figur 5 beschrieben. Das Initiator-Gerät funktioniert in genau der gleichen Weise wie bei Figur 3 beschrieben. Allerdings scannt das antwortende Gerät keine Funkkanäle, solange kein Wake-up Signal empfangen wird. Das antwortende Gerät führt Prozedur 4, durch Referenznummer 40 gekennzeichnet, aus, welche ein Wake-Up Programm 41 enthält, welches es dem antwortenden Gerät ermöglicht, eine Präambel von dem Initiator-Gerät auf der zweiten Nachrichtenverbindung zu erhalten. Bei Schritt 42 wird überprüft, ob die Präambel empfangen wurde. Wenn die Präambel nicht empfangen wurde, kehrt das antwortende Gerät in einen Schlafmodus 43 zurück. Andernfalls beginnt die Scan-Prozedur 1, um Daten auf der Nachrichtenverbindung 1 zu empfangen.

Es werden also bei diesem Modus beide Nachrichtenkanäle 1 und 2 benutzt. Im Normalbetrieb befindet sich eines der Geräte nur im Kanal-Scan-Modus und das andere Gerät "schläft". Um eine Datenübertragung einzuleiten, sendet das Initiator-Gerät eine Präambel zum antwortenden Gerät auf der Nachrichtenverbindung 2, um das antwortende Gerät aufzuwecken, welches dann den Kanal-Scan-Modus startet. Nach einer bestimmten Zeit auf Nachrichtenverbindung 2 läuft die Kommunikation auf Nachrichtenverbindung 1 weiter.

### Modus 3

In einer dritten Betriebsart funktioniert das Initiator-Gerät ebenfalls in der gleichen Weise wie bei Figur 5 beschrieben, mit der Ausnahme, daß die Datenübertragung auf einem oder mehreren von dem Initiator-Gerät ausgesuchten Kanälen erfolgt. Im Normalbetrieb befindet sich das Initiator-Gerät wieder im Kanal-Scan-Modus und das andere Gerät schläft. Um eine Datenübertragung einzuleiten, sendet das Initiator-Gerät eine Präambel, gefolgt von einer Datennachricht auf Nachrichtenverbindung 2. Die Nachricht enthält Kanalinformationen über einen Kanal auf Nachrichtenverbindung 1. Die Präambel und die erste Datennachricht werden auf Nachrichtenverbindung 2 gesendet. Die Präambel weckt das antwortende Gerät auf, welches dann die Nachricht von Nachrichtenverbindung 2 empfängt und dekodiert. Wenn das antwortende Gerät die richtige Präambel empfängt, wird es anschließend auf den zweiten vom anführenden Gerät ausgewählten Kanal, umschalten. Weiterer Nachrichtenaustausch kann vom anführenden Gerät auf beliebigen anderen ausgewählten Kanälen gestartet werden. Diese zusätzlichen Kanäle können zufällig ausgewählt werden, wobei die Informationen über die Kanalwahl verschlüsselt sind, um die Übertragungssicherheit zu erhöhen.

### Kanalaufteilung während der Antwort

Insbesondere sendet das Initiator-Gerät im Übertragungsmodus 3 eine erste Präambel und eine Datennachricht zum empfangenden Gerät auf Nachrichtenverbindung 2. Der Datenabschnitt dieser Nachricht enthält verschlüsselte Informationen, die zu mehr als einem Kanal auf Nachrichtenverbindung 1 gehören, z.B. Kanäle 2, 4 und 5. Die ausgewählten Kanäle sind von der Gruppe, die als "leise" Kanäle registriert worden sind.

Dies veranlaßt das empfangende Gerät, seine Antwort zum Initiator-Gerät auf die entsprechenden Kanäle aufzuteilen, z.B. 2,4 und 5.

Das Initiator-Gerät erwartet, daß die Antwort in der oben beschriebenen Weise strukturiert ist und ist deshalb in der Lage, seinen Empfänger entsprechend zu konfigurieren.

Diese Methode erhöht die Sicherheit des Systems, indem es einen Relaissender dazu zwingen würde, die gleiche breitbandige Verstärker-Charakteristik zu haben. Dies verringert die Wahrscheinlichkeit, daß der Relaissender sich auf den richtigen Kanal schalten kann und dadurch unbemerkt bleibt.

### Manipulation durch einen Relaissender

Bei einem der beiden oben beschriebenen Betriebsarten kann die Scan-Einrichtung auch dazu verwendet werden, Kanäle zu registrieren, deren Signal- oder Rauschpegel höher als die vorbestimmte Schwelle sind. Alle Kanäle mit solchen hohen Pegeln können dann von der Scan-Prozedur ausgeschlossen werden. Ein Kanal mit einem bestimmten Signalpegel könnte das Vorhandensein eines Relaissenders aufzeigen. Eine weitere Möglichkeit, einen Relaissender zu entdecken, wäre, einen Vergleich der Rausch-Charakteristika über alle Kanäle auszuführen. In jedem Fall, wenn ein Relaissender entdeckt wird, kann die Scan-Prozedur abgebrochen werden.

Die mit der Erfindung erzielten Vorteile stellen deshalb einen erhöhten Schutz gegen Eindringversuche durch einen Relaissender und allgemein gegenüber Funkstörungen dar. Des weiteren ermöglicht eine zweite Nachrichtenverbindung, daß die Erfindung so konfiguriert wird, daß die verschiedenen Anforderungen an die Ausgangsleistung der ausgewählten Kanäle berücksichtigt werden können.

Insbesondere gibt es Fälle, bei denen eine beabsichtigte Veränderung der Ausgangsleistung des gesendeten Funksignals wünschenswert ist, um entweder eine größere Reichweite bei größerer Entfernung zwischen den Geräten zu erzielen oder um eine kürzere Reichweite zu erzielen, wenn die Geräte näher zusammen liegen. Dies hat Vorteile bei der Sicherheit und kann außerdem Energie sparen.

Adaptive Regelung der Sendeleistung kann in Situationen verwendet werden, wo zum Beispiel beide Sendeeinheiten entweder lokal oder durch Funkverbindung aktiviert werden.

### Adaptive Leistungsregelung

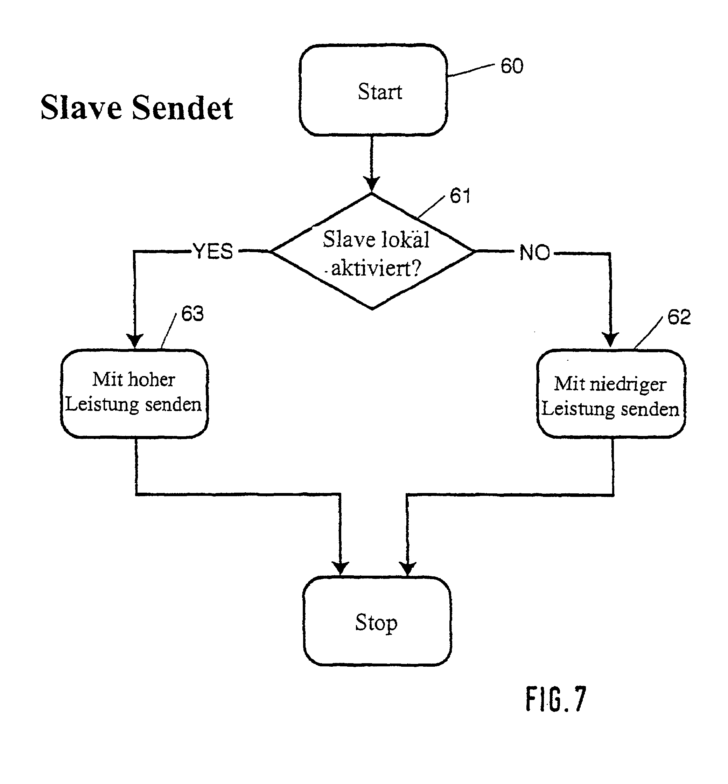

Figuren 6 und 7 veranschaulichen ein Beispiel, wo eines der Geräte die Mastereinheit ist, die nach Prozedur 50 funktioniert, wobei bei 51 eine Abfrage darüber, ob die Mastereinheit lokal durch einen Detektor oder Schalter aktiviert wurde, gemacht wird. Wenn die Mastereinheit in dieser Weise aktiviert wird, dann sendet die Mastereinheit mit niedriger Leistung bei Schritt 52. Das andere Gerät des Systems ist der Slave, der nach der Aktivierung durch Empfang eines Signals vom Master mit niedriger Leistung ebenfalls mit niedriger Leistung sendet. Insbesondere kann der Slave nach Prozedur 60 arbeiten, wo bei 61 bestimmt wird, ob der Slave lokal aktiviert wurde. Wenn der Slave lokal aktiviert wurde, zum Beispiel durch einen manuellen Schalter, dann sendet das Gerät mit hoher Leistung bei Schritt 63. Anderenfalls, wenn das Gerät durch eine Sendung vom Master mit niedriger Leistung aktiviert wurde, dann sendet der Slave bei Schritt 32 ebenfalls mit niedriger Leistung.

Ein solches System eignet sich insbesondere für Anwendungen im Fahrzeugsicherheitsbereich, wo, wenn eine Slave-Einheit sich in der Nähe des Masters befindet (weniger als 2,5 Meter), eine Übertragung mit hoher Leistung nicht notwendig ist. Dies bringt den Vorteil einer verringerten Reichweite und eines verringerten Stromverbrauchs mit sich. Wenn die Kommunikation durch die Mastereinheit eingeleitet wird, senden beide Geräte auf der Nachrichtenverbindung 1 mit niedriger Leistung. Die Kommunikation kann jedoch auf jedem der beiden Nachrichtenkanäle 1 oder 2 nach einer der oben beschriebenen Prozeduren eingeleitet werden. Wenn der Slave sich jedoch nicht in der Nähe des Masters befindet, dann wird eine hohe Ausgangsleistung benötigt, damit das System bei weiteren Entfernungen funktioniert.

### Sicherheit und Zugangskontrolle

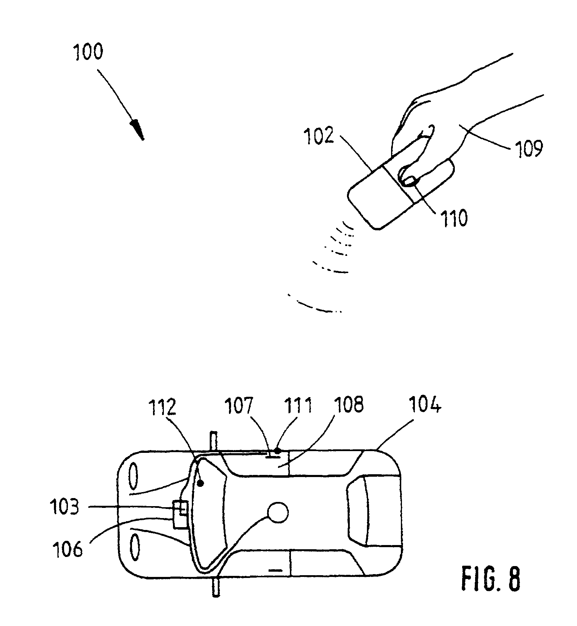

Anhand eines bestimmten Beispiels wird das System in Figur 8 bei einer Anwendung in einem Fahrzeugsicherungssystem gezeigt.

Das System 100 umfaßt eine Slave-Einheit in der Form eines tragbaren ersten Sendeempfängers 102, der,für die Kommunikation über Antenne 105 mit einer sich im Fahrzeug 104 befindlichen Master-Einheit, welche einen weiteren Sendeempfänger 103 enthält, ausgelegt ist. Der zweite Sendeempfänger 103 ist mit einer Steuereinheit 106 verbunden, welche wiederum mit einem Detektor 107 in einer Fahrzeugtür 108 verbunden ist. Der Detektor wird per Hand durch eine Person, die in das Fahrzeug einsteigen möchte, aktiviert. Dies geschieht durch Betätigung des Türgriffes, was durch einen Mikroschalter, einen kapazitiven Näherungsmelder oder eine piezoelektrische Vorrichtung erkannt werden kann.

Die Steuereinheit 106 ist so ausgestaltet, daß sie die Sendeleistung der Signale des Sendeempfängers 103 zwischen hoher Leistung und niedriger Leistung auswählt. Der Niedrigleistungsmodus ist für das Senden über kurze Entfernungen, wenn angenommen wird, daß der tragbare Sendeempfänger sich neben dem Fahrzeug oder sonstwo in dessen Nähe befindet. Der Niedrigleistungsmodus wird ausgelöst, wenn eine Person zum Einstieg in das Fahrzeug den Detektor 107 mit der Hand aktiviert. Der Hochleistungsmodus wird für Funkübertragungen über größere Entfernungen benutzt. Er wird ausgelöst, wenn eine Person die Sendetaste 100 an dem tragbaren Sendeempfänger 102 drückt. Für beide Modi könnte die Antenne 105 allein ausreichen; es ist allerdings auch vorgesehen, daß eine Vielzahl von Antennen verwendet werden kann, wobei in einer möglichen Ausführung eine Niedrigfrequenz-Antenne zum Beispiel an den Orten 111 und 112 angebracht wird, wogegen die Antenne 105 eine UHF-Antenne wäre. In diesem Ausführungsbeispiel würde die Antenne 111 für die Kommunikation mit dem tragbaren Sendeempfänger neben dem Fahrzeug benutzt werden, um Eintritt zu gewähren, wogegen Antenne 112 dazu genutzt werden würde, sicherzustellen, daß die Person, wenn sie sich im Fahrzeug befindet, auch zum Benutzen des Fahrzeuges berechtigt ist. Der Motor könnte dann entsprechend freigegeben oder gesperrt werden.

Die UHF Antenne könnte als Dipolantenne oder als Schleifenantenne ausgestaltet sein, wobei sie zum Beispiel auf 315 MHz, 433,92MHz und 868 MHz abgestimmt sein kann, wogegen die Niedrigfrequenzantenne eine Ferritantenne mit mehreren Windungen sein kann, die auf Frequenzen im Bereich 30 bis 300 KHz oder bevorzugterweise im Bereich 90 bis 140 KHz sendet.

Die Kommunikation zwischen den Sendeempfängern kann nach jeder der oben beschriebenen Modi geschehen.

Die Erfindung wurde anhand von Beispielen beschrieben, wobei eine Vielzahl von Abwandlungen und Änderungen dazu gemacht werden können, ohne den Rahmen der beschriebenen Erfindung zu verlassen.

## Patentansprüche

1. Kommunikationsverfahren mit einem ersten und einem zweiten Gerät (A, B), wobei beide Geräte (A, B) zum Senden und zum Empfangen ausgestaltet sind, und eines der Geräte (A) als Initiator und das jeweils andere Gerät (B) als antwortendes Gerät fungiert, **gekennzeichnet durch** ein Scannen von jedem von mehreren Funkkanälen, einer Registrierung von Signal- und/oder Rauschpegeln und Kommunikation zwischen den Geräten (A, B) auf zumindest einem aus einer Menge ausgewählten Ranal, wobei die Auswahl auf einer Auswertung des Signal- und/oder Rauschpegels auf zumindest einem der Kanäle basiert.

2. Verfahren nach Anspruch 1, **dadurch gekennzeichnet, daß** das Scannen der Kanäle durch das Initiator-Gerät (A) ausgeführt wird und die Kommunikation zwischen den Geräten (A,B) durch das Senden eines Startsignals vom Initiator (A) auf zumindest einem Kanal erfolgt, gefolgt von Datentransfers.

3. Verfahren nach Anspruch 2, **dadurch gekennzeichnet, daß** das antwortende Gerät (B) ebenfalls die Kanäle scannt und, bei Empfang des Signals sich auf mindestens einen ausgewählten Kanal schaltet, um Daten vom Initiator-Gerät (A) zu empfangen.

4. Verfahren nach Anspruch 2, **dadurch gekennzeichnet, daß** das antwortende Gerät (B) zuerst die Funkkanäle scannt, nachdem es ein Einleitungssignal empfangen hat, um Daten vom Initiator-Gerät (A) zu empfangen.

5. Verfahren nach den Ansprüchen 2 bis 4, **dadurch gekennzeichnet, daß** die Kommunikation zwischen den Geräten (A,B) das Senden auf einer Vielzahl von Funkkanälen einschließt.

6. Verfahren nach Anspruch 5, **dadurch gekennzeichnet, daß** das Senden zwischen den Geräten (A,B) auf einem zweiten ausgesuchten Kanal, der vom Initiator-Gerät (A) bestimmt wird, erfolgt, wobei Informationen über die Identifikation des zweiten Kanals zusammen mit den Daten übermittelt werden, worauf das zweite Gerät (B) den Funkkanal wechselt, um weitere Daten über den zweiten ausgewählten Kanal nach Empfang der Informationen zu erhalten.

7. Verfahren nach Anspruch 6, **dadurch gekennzeichnet, daß** die Information über den zweiten Kanal verschlüsselt wird, um erhöhte Sicherheit beim Senden zu erzielen.

8. Verfahren nach Anspruch 1, **dadurch gekennzeichnet, daß** andere Nachrichtenverbindungen zur Kommunikation zwischen den Geräten (A,B) aufgebaut werden.

9. Verfahren nach Anspruch 7, **dadurch gekennzeichnet, daß** die Auswahl der zum Senden eines Startsignals benutzten Nachrichtenverbindung darauf basiert, welches der Geräte als Initiator (A) aktiviert wurde.

10. Verfahren nach Anspruch 7, **dadurch gekennzeichnet, daß** die Kommunikation auf der ersten Nachrichtenverbindung auf einem ausgewählten Funkkanal eingeleitet wird und auf einer zweiten Nachrichtenverbindung auf einem zweiten ausgewählten Funkkanal weitergeführt wird, was durch das Initiator-Gerät (A) bestimmt wird.

11. Verfahren nach Anspruch 7, **dadurch gekennzeichnet, daß** die Nachrichtenverbindungen so ausgestaltet sind, daß sie entweder mit hoher oder niedriger Leistung senden können, wobei die Sendeleistung durch das Initiator-Gerät (A) bestimmt wird.

12. Verfahren nach den Ansprüchen 1 bis 11, **dadurch gekennzeichnet, daß** zumindest ein ausgewählter Kanal als Kanal mit niedrigem Störpegel bestimmt wird.

13. Verfahren nach den Ansprüchen 1 bis 12, **dadurch gekennzeichnet, daß** jeder Kanal mit einem Signal und/oder Rauschpegel über einem Schwellwert von den gescannten Kanälen ausgenommen wird.

14. Verfahren nach den Ansprüchen 1 bis 13, **dadurch gekennzeichnet, daß** ein Vergleich der Rausch-Charakteristika aller Kanäle gemacht wird, um Relaissender oder Ähnliches zu erkennen.

15. Verfahren nach den Ansprüchen 1 bis 14, **dadurch gekennzeichnet, daß** das Verfahren zur Sicherung oder Zugangskontrolle dient und daß das erste Gerät (A) ein tragbarer erster Sendeempfänger (102) ist und das zweite Gerät (B) ein zweiter Sendeempfänger (103) ist, der mit einer Steuereinheit (106) zur Sicherung oder Zugangskontrolle zu einem gesicherten Raum verbunden ist, wobei das Verfahren des weiteren folgendes umfaßt:
Erzeugung eines Startsignals auf zumindest einem, entweder vom ersten Sendeempfänger (102), wenn dieser aktiviert wurde, oder vom zweiten Sendeempfänger (103), wenn dieser aktiviert wurde, ausgewählten Kanal, verbunden mit der Übertragung von Sicherheitsinformationen zwischen den Sendeempfängern (102,103), um Zugang zu dem gesicherten Raum zu erhalten.

16. Verfahren nach Anspruch 15, **dadurch gekennzeichnet, daß** der erste Sendeempfänger (102) einen manuell zu betätigenden Sendeschalter (110) enthält und daß die Steuereinheit (106) mit einem Detektor (107) verbunden ist, der durch die Nähe oder den Kontakt einer Person, die Eintritt zu dem gesicherten Raum ersucht, ausgelöst wird, wobei der erste Sendeempfänger (102) durch den Schalter (110) aktiviert wird und der zweite Sendeempfänger (103) aktiviert wird, wenn der Detektor (107) aktiviert wird.

17. System zur Sicherung oder Zugangskontrolle, bestehend aus:
einem ersten tragbaren Sendeempfänger (102), und einer Steuereinheit (106), die mit einem zweiten Sendeempfänger (103), welcher zu einem gesicherten Raum gehört, verbunden ist, wobei der erste und zweite Sendeempfänger (102, 103) so ausgestaltet sind, dass ein Startsignal bei Aktivierung entweder eines ersten oder zweiten Geräts (A,B) erzeugt wird, so dass Sicherungsinformationen übertragen werden können und Zugang zu dem gesicherten Raum gewährt werden kann, wobei der erste und zweite Sendeempfänger (102, 103) einen Kanalscanner zum zyklischen Absuchen jedes Kanals von überwachten Funkkanälen und zur Registrierung von Signal- und/oder Rauschpegeln enthält, **dadurch gekennzeichnet, dass** der erste und zweite Sendeempfänger (102, 103) einen Kanalselektor zur Bestimmung von zumindest einem Kanal mit niedrigerem Signal oder Rauschpegel zum Senden des Startsignals enthält.

18. System nach Anspruch 17, **dadurch gekennzeichnet, daß** ein Detektor (107), welcher durch Nähe oder Kontakt einer Person, die Eintritt zu dem gesicherten Raum ersucht, aktiviert wird, wobei der Detektor (107) mit einer Steuereinheit (106) verbunden ist und der erste Sendeempfänger (102) einen manuell zu bedienenden Schalter (110) enthält, der den ersten Sendeempfänger (102) aktiviert, wogegen der zweite Sendeempfänger (103) durch den Detektor (107) aktiviert wird.

19. System nach Anspruch 18, **dadurch gekennzeichnet, daß** die Steuereinheit (106) so ausgestaltet ist, daß sie die Sendeleistung des zweiten Sendeempfängers (103) zwischen einem Niedrigleistungsmodus, wenn der Detektor (107) aktiviert wurde, und einem Hochleistungsmodus, wenn der Schalter (110) bedient wurde, umschalten kann.

20. System nach den Ansprüchen 17 bis 19, **dadurch gekennzeichnet, daß** die Sendeempfänger (102, 103) für eine Übertragung auf mehreren Funkkanälen ausgelegt sind.

21. System nach den Ansprüchen 17 bis 20, **dadurch gekennzeichnet, daß** der gesicherte Raum das Innere eines Fahrzeuges ist.

## Claims

1. Communication method with a first and a second device (A, B), both devices (A, B) being designed for transmitting and for receiving, and one of the devices (A) acting as an initiator and the other device (B) respectively acting as a responding device, **characterized by** a scanning of each of a plurality of radio channels, a registration of signal and/or noise levels and communication between the devices (A, B) on a least one channel selected from a set, the selection being based on an evaluation of the signal and/or noise level on at least one of the channels.

2. Method according to Claim 1, **characterized in that** the scanning of the channels is performed by the initiator device (A) and the communication between the devices (A, B) takes place by the transmission of a start signal by the initiator (A) on at least one channel, followed by data transfers.

3. Method according to Claim 2, **characterized in that** the responding device (B) likewise scans the channels and, on reception of the signal, switches to at least one selected channel in order to receive data from the initiator device (A).

4. Method according to Claim 2, **characterized in that**, after it has received an initiation signal, the responding device (B) firstly scans the radio channels in order to receive data from the initiator device (A).

5. Method according to Claims 2 to 4, **characterized in that** the communication between the devices (A, B) includes transmission on a multiplicity of radio channels.

6. Method according to Claim 5, **characterized in that** the transmission between the devices (A, B) takes place on a second selected channel, which is determined by the initiator device (A), information concerning the identification of the second channel being transmitted together with the data, whereupon the second device (B) changes the radio channel in order to obtain further data concerning the second selected channel after reception of the information.

7. Method according to Claim 6, **characterized in that** the information concerning the second channel is encoded in order to achieve increased security during transmission.

8. Method according to Claim 1, **characterized in that** other transmission links are set up for communication between the devices (A, B).

9. Method according to Claim 7, **characterized in that** the selection of the transmission link used for the tranmission of a start signal is based on which of the devices was activated as the initiator (A).

10. Method according to Claim 7, **characterized in that** the communication is initiated on the first transmission link on one selected radio channel and is continued on a second transmission link on a second selected radio channel, which is determined by the initiator device (A).

11. Method according to Claim 7, **characterized in that** the transmission links are designed such that they can tranmit either with high power or low power, the transmission power being determined by the initiator device (A).

12. Method according to Claims 1 to 11, **characterized in that** at least one selected channel is determined as a channel with a low interference level.

13. Method according to Claims 1 to 12, **characterized in that** each channel with a signal and/or noise level above a threshold value is omitted from the scanned channels.

14. Method according to Claims 1 to 13, **characterized in that** a comparison of the noise characteristics of all the channels is made in order to detect relay transmitters or the like.

15. Method according to Claims 1 to 14, **characterized in that** the method serves for securing or access control and **in that** the first device (A) is a portable first transceiver (102) and the second device (B) is a second transceiver (103), which is connected to a control unit (106) for securing or access control to a secured space, the method further comprising the following:
generation of a start signal on at least one channel, selected by the first transceiver (102) if it has been activated or by the second transceiver (103) if it has been activated, combined with the transmission of security information between the transceivers (102, 103), in order to obtain access to the secured space.

16. Method according to Claim 15, **characterized in that** the first transceiver (102) contains a manually operable transmission switch (110) and **in that** the control unit (106) is connected to a detector (107), which is triggered by the proximity or contact of a person seeking entry to the secured space, the first transceiver (102) being activated by the switch (110) and the second transceiver (103) being activated if the detector (107) is activated.

17. System for securing or access control, comprising:
a first portable transceiver (102), and a control unit (106), which is connected to a second transceiver (103), which belongs to a secured space, the first and second transceivers (102, 103) being designed such that a start signal is generated when either a first or second device (A, B) is activated, so that security information can be transmitted and access can be granted to the secured space, the first and second transceivers (102, 103) containing a channel scanner for the cyclical scanning of each channel of radio channels being monitored and for the registration of signal and/or noise levels, **characterized in that** the first and second transceivers (102, 103) contain a channel selector for the determination of at least one channel with a lower signal or noise level for transmitting the start signal.

18. System according to Claim 17, **characterized in that** a detector (107) which is activated by the proximity or contact of a person seeking entry to the secured space [lacuna], the detector (107) being connected to a control unit (106) and the first transceiver (102) containing a manually operable switch (110), which activates the first transceiver (102), whereas the second transceiver (103) is activated by the detector (107).

19. System according to Claim 18, **characterized in that** the control unit (106) is designed such that it can switch over the transmission power of the second transceiver (103) between a low-power mode when the detector (107) has been activated and a high-power mode when the switch (110) has been operated.

20. System according to Claims 17 to 19, **characterized in that** the transceivers (102, 103) are designed for a transmission on a plurality of radio channels.

21. System according to Claims 17 to 20, **characterized in that** the secured space is the interior of a vehicle.

## Revendications

1. Procédé de communication comprenant un premier et un second appareils (A, B), les deux appareils (A, B) étant conçus pour émettre et recevoir et l'un des appareils (A) fonctionnant comme initiateur et l'autre appareil (B) comme appareil répondeur,
**caractérisé par**
un balayage de chacun des différents canaux radio, d'un enregistrement de niveau de signaux et/ou de bruits et de communication entre les appareils (A, B) sur au moins l'un des canaux choisis dans un ensemble, la sélection reposant sur une exploitation du signal et/ou du niveau de bruit d'au moins l'un des canaux.

2. Procédé selon la revendication 1,
**caractérisé en ce que**
le balayage des canaux est effectué par l'appareil initiateur (A) et la communication entre les appareils (A, B) se fait par l'émission d'un signal de démarrage par l'initiateur (A) sur au moins un canal, émission suivie par un transfert de données.

3. Procédé selon la revendication 2,
**caractérisé en ce que**
l'appareil répondeur (B) balaye également les canaux et à la réception du signal il commute sur au moins un canal sélectionné pour recevoir les données de l'appareil initiateur (A).

4. Procédé selon la revendication 2,
**caractérisé en ce que**
l'appareil répondeur (B) balaye tout d'abord les canaux radio après avoir reçu un signal de mise en route pour recevoir les données de l'appareil initiateur (A).

5. Procédé selon l'une quelconque des revendications 2 à 4,
**caractérisé en ce que**
la communication entre les appareils (A, B) inclut l'émission sur un grand nombre de canaux radio.

6. Procédé selon la revendication 5,
**caractérisé en ce que**
l'émission entre les appareils (A, B) se fait sur un second canal recherché défini par l'appareil initiateur (A) et les informations concernant l'identification du second canal sont transmises avec les données puis le second appareil (B) change de canal d'émission pour recevoir d'autres données par le second canal choisi après la réception des informations.

7. Procédé selon la revendication 6,
**caractérisé en ce que**
l'information est codée par le second canal pour une plus grande sécurité à l'émission.

8. Procédé selon la revendication 1,
**caractérisé en ce qu'**
on établit d'autres liaisons de transmission d'informations entre les appareils (A, B).

9. Procédé selon la revendication 7,
**caractérisé en ce que**
la sélection de la liaison de transmission d'informations utilisée pour l'émission d'un signal de démarrage repose sur l'appareil qui a été activé comme initiateur (A).

10. Procédé selon la revendication 7,
**caractérisé en ce que**
la communication est commencée par la première liaison de transmission d'informations par le canal radio sélectionné et elle se poursuit sur une seconde liaison de transmission d'informations sur un second canal radio sélectionné, ce qui est déterminé par l'appareil initiateur (A).

11. Procédé selon la revendication 7,
**caractérisé en ce que**
les liaisons de transmission d'informations sont conçues pour émettre avec soit une puissance élevée soit une puissance faible et la puissance d'émission est définie par l'appareil initiateur (A).

12. Procédé selon l'une quelconque des revendications 1 à 11,
**caractérisé en ce qu'**
on définit au moins un canal sélectionné comme canal à faible niveau de bruit.

13. Procédé selon l'une quelconque des revendications 1 à 12,
**caractérisé en ce que**
chaque canal ayant un signal et/ou un niveau de bruit dépassant un seuil est éliminé des canaux balayés.

14. Procédé selon l'une quelconque des revendications 1 à 13,
**caractérisé par**
une comparaison des caractéristiques de bruit de tous les canaux pour reconnaître l'émetteur relais ou un moyen analogue.

15. Procédé selon l'une quelconque des revendications 1 à 14,
**caractérisé en ce qu'**
il est utilisé pour la protection ou le contrôle d'accès et le premier appareil (A) est un premier émetteur-récepteur (102), portatif, et le second appareil (B) un second émetteur-récepteur portatif (103), relié à une unité de commande (106) pour la protection ou le contrôle d'accès d'un local protégé,
le procédé étant en outre **caractérisé en ce que** :
on génère un signal de départ d'un canal du premier émetteur-récepteur (102) lorsque celui-ci a été activé ou par le second émetteur-récepteur (103) lorsque celui-ci a été activé, en liaison avec la transmission d'informations de sécurité entre les récepteurs-émetteurs (102, 103) pour accéder au local protégé.

16. Procédé selon la revendication 15,
**caractérisé en ce que**
le premier émetteur-récepteur (102) comporte un commutateur d'émission (110) à commande manuelle et l'unité de commande (106) est reliée à un détecteur (107) déclenché par la proximité ou le contact d'une personne qui cherche à accéder au local protégé, le premier émetteur-récepteur (102) étant activé par le commutateur (110) et le second émetteur-récepteur (106) étant activé lorsque le détecteur (107) est activé.

17. Système de protection ou de contrôle d'accès comprenant un premier émetteur-récepteur (102) portatif et une unité de commande (106) reliée au second émetteur-récepteur (103) qui appartient au local protégé.
le premier et le second émetteur-récepteur (102, 103) étant conçus pour générer un signal de départ lors de l'activation soit du premier soit du second appareil (A, B) pour transmettre les informations de sécurité et permettre l'accès au local protégé,
le premier et le second émetteur-récepteur (102, 103) comportant un dispositif de balayage de canal pour rechercher cycliquement chaque canal parmi les canaux radio surveillés et pour enregistrer des niveaux de signal et/ou de bruit,
**caractérisé en ce que**
le premier et le second émetteur-récepteur (102, 103) comportent un sélecteur de canal pour déterminer au moins un canal à faible niveau de signal ou de bruit pour émettre le signal de départ.

18. Système selon la revendication 17,
**caractérisé en ce qu'**
un détecteur (107) est activé par la proximité ou le contact d'une personne cherchant à pénétrer dans le local protégé, et
le détecteur (107) est relié à une unité de commande (106) et le premier émetteur-récepteur (102) comporte un commutateur (110) manuel qui active le premier émetteur-récepteur (102) alors que le second émetteur-récepteur (103) est activé par le détecteur (107).

19. Système selon la revendication 18,
**caractérisé en ce que**
l'unité de commande (106) est conçue par commuter la puissance d'émission du second émetteur-récepteur (103) entre un mode à faible puissance si le détecteur (107) est activé et un mode de forte puissance si le commutateur (110) a été activé.

20. Système selon l'une quelconque des revendications 17 à 19,
**caractérisé en ce que**
les émetteurs-récepteurs (102, 103) sont conçus pour une transmission sur plusieurs canaux radio.

21. Système selon l'une quelconque des revendications 17 à 20,
**caractérisé en ce que**
le local protégé est l'habitacle d'un véhicule.
